# EUROPEAN PATENT SPECIFICATION

(11) **EP 0 475 431 B1**
(45) Date of publication and mention of the grant of the patent: **24.04.1996**
(21) Application number: 91115549.7
(22) Date of filing: 13.09.1991
(51) Int. Cl.: B29D 11/00, B29C 39/42, B29C 33/60

(54) **Method of manufacturing thermoplastic-resin molded optical member**
Verfahren zur Herstellung eines optischen Teils aus gegossenem thermoplastischem Kunststoff
Procédé pour la fabrication d'un organe optique moulé en polymère thermoplastique

(30) Priority: 14.09.1990 JP 245433/90; 19.07.1991 JP 203754/91
(43) Date of publication of application: 18.03.1992
(73) Proprietor: THE FURUKAWA ELECTRIC CO., LTD., Tokyo (JP)
(72) Inventor: Nishiguchi, Masaki, c/o The Furukawa, Chiyoda-ku, Tokyo (JP); Ohishi, Yoshiaki, c/o The Furukawa, Chiyoda-ku, Tokyo (JP); Chiba, Kazuo, c/o The Furukawa, Chiyoda-ku, Tokyo (JP); Yamaguchi, Michio, c/o The Furukawa, Chiyoda-ku, Tokyo (JP)
(74) Representative: Hansen, Bernd, Dr.rer.nat.

(56) References cited:
- EP-A- 0 351 770
- EP-A- 0 384 243
- FR-A- 2 593 431
- US-A- 2 911 678
- US-A- 3 423 488
- JAPANESE PATENT GAZETTE, Section Ch, Week 9028, Derwent Publications Ltd, LONDON, GB; class A, no. 88-0293490; & JP-A-02141210 (ASAHI GLASS K.K.) 30-05-1990
- PATENT ABSTRACTS OF JAPAN, vol. 10, (C028)(C326), 04 February 1986; & JP-A-60181141 (NIPPON MEKTRON K.K.) 14-09-1985

## Description

The present invention relates to a method of manufacturing thermoplastic-resin molded optical members like optical assembly members, preform of plastic optical fibers, or light wave guide, for example.

Conventionally, according to the kind of products to be molded, those thermoplastic-resin molded optical members like optical assembly members, plastic optical fibers, or light wave guide members, are manufactured by executing either an extrusion molding process or an injection molding process. Nevertheless, these conventional methods of manufacturing thermoplastic-resin molded optical members still have a variety of technical problems to solve.

Concretely, when manufacturing molded optical members by applying an extrusion molding process, normally, there are a number of grooves in the resin path of any extrusion molding machine which cause resin material to easily build up inside as a result of the movement of the screw of this molding machine. This in turn prevents resin material simultaneously delivered to the extrusion molding machine from a hopper from simultaneously being extruded, but part of resin material adheres to the screw as a result of the occurrence of convection which results in the deposited resinous residue.

On the other hand, if high temperatures are applied to the molding process, then the heated screw causes the adhered resin to degrade generating coloration. The color-borne resin material is then blended with fresh resin material supplied to implement the following molding process, and then extruded from the molding machine. As a result, the molded product bears unwanted color.

On the other hand, when setting resin material in the mold by executing an injection molding operation to produce molded optical members, distortion is generated in the molded piece. Once the distortion internally occurs, it easily causes the molded piece to crack. Any molded product containing internal distortion is by no means suited for composing optical members. Furthermore, the injection molding process is not suited for the production of molded resin products having lengthy and slender configuration or special form.

Japanese Patent Application JP-A-02141210 discloses a mold releasing agent comprising fluorine containing alicyclic ring compounds and optionally a thermosetting resin.

French patent application FR-A-2593431 reveals a process for the manufacture of a polymer preform, in particular an optical fiber preform. The process comprises a step of formation of a core by polymerisation and a step of formation of a sheath surrounding the core.

United States patent application US-A-3423488 provides a method for casting resinous lenses comprising the preparation of a replica mold of a thermoplastic resin based on a master pattern. A thermosetting resin is then placed in the replica mold and cured under an atmosphere substantially free of oxygen.

The closest prior art to the present invention is represented by US patent application US-A-3423488. A method of molding void-free olefin polymers is revealed. A specified thermoplastic resin is fed into a container and the resin is then deformed under a pressure lower than atmospheric pressure and at a temperature causing the thermoplastic resin to melt and turn into a fluid. The container is then cooled while pressurizing the material in the container with a piston.

Therefore, the object of the invention is to provide a novel method of manufacturing thermoplastic-resin molded optical members, which can securely produce quality molded products free from internal distortion and colored effect even when applying high temperature to the molding operation.

To achieve the above object, the invention provides a method of manufacturing thermoplastic-resin molded optical members, comprising the steps of feeding thermoplastic-resin material into a mold, defoaming said thermoplastic-resin material in vacuo at a temperature causing thermoplastic-resin material to turn into fluid and producing a molded member by cooling off the mold in the upward direction from the bottom side while pressurizing a surface of the material in said mold characterised in that pressurizing is carried out with inert gas by applying a pressure in the range from 0.5 to 7 MPa (5 to 70 kgf/cm²).

The above object is further achieved according to the invention by a method as defined in claim 7. Particular embodiments of the invention are disclosed in the dependent claims.

This invention can be more fully understood from the following detailed description when taken in conjunction with the accompanying drawings, in which:
Fig. 1 designates the front view of an example of the mold available for executing the method embodied by the invention;
Fig. 2 designates the sectional view of the mold shown in Fig. 1;
Fig. 3 schematically designates the structure of the isothermal tub made available for executing the method embodied by the invention;
Figs. 4, 6, and 10 respectively designate the front views of other examples of the mold made available for executing the method embodied by the invention;
Figs. 5, 7, and 11 respectively designate the sectional views of the molds shown in Figs. 4, 6, and 10;
Fig. 8 schematically designates a molded optical member produced from the mold shown in Fig. 6;
Fig. 9 schematically designates light wave guide produced by applying the molded optical member shown in Fig. 8;
Fig. 12 schematically designates another example of the isothermal tub made available for executing the method embodied by the invention;
Fig. 13 schematically designates a molded optical member produced from the mold shown in Fig. 10;
Fig. 14 schematically designates the light wave guide produced by applying the optical member shown in Fig. 13; and
Fig. 15 schematically designates a mold made available for manufacturing a molded optical member by applying a conventional injection molding operation.

Characteristically, the method of manufacturing thermoplastic-resin molded optical member embodied by the invention executes those sequential processes including the following: First, the prepared mold is filled with selected thermoplastic-resin material, and then, the resin-loaded mold is installed in an isothermal tub. Substantially, the mold available for embodying the invention is composed of a container made from either glass, metal, or silica. Next, thermoplastic-resin material in the isothermal tub is thermally turned into fluid state. Concretely, a defoaming process is applied to the thermoplastic-resin material by heating the resin material to flow with a vacuum in the interior of isothermal tub. Next, the isothermal tub is filled with inert gas to pressure the resin material in the mold. Next, the interior of the isothermal tub is gradually cooled off in the upward direction from the bottom side. Finally, the mold is taken out of the isothermal tub to obtain a resin-molded optical member.

Either crystalline thermoplastic-resin like polymethylpentene, fluoroplastic or non-crystalline thermoplastic-resin like polycarbonate, polyarylate, polysulfone may be made available for the molding process embodied by the invention. In particular, such thermoplastic-resin that can thermally be molded at a minimum of 200°C is suited for the invention. If any conventional molding process ever applies more than 200°C of molding temperature, it results in the occurrence of oxidation and degradation of resin material. It is desired that the thermoplastic-resin available for the invention be free of volatile ingredients because the resin material is degassed in vacuo and molded to the optical member. Either pellet-form, powder-form, or flake-form thermoplastic-resin may be loaded in the mold at normal temperature. Selected thermoplastic-resin material melted at the molding temperature or below this temperature may directly be loaded in the mold in the fluid state. It is desired that the fluid resin material be loaded in the mold in vacuo.

The process for defoaming the loaded resin material is executed in the isothermal tub in vacuo. The defoaming process effectively removes impurities like monomers from resin material, and yet, the defoaming process prevents external impurities and foreign substance from mixing into the loaded resin material. In the case of molding optical members, optical characteristics can be made free from adverse effects.

When executing the molding process embodied by the invention, the isothermal tub is filled with inert gas to pressure the surface of the melted resin material in the mold. Either argon gas, or helium gas, or nitrogen gas may be used. Owing to the presence of inert gas in the isothermal tub, not only achieving satisfactory effect of molding the loaded resin material, but the molding system can also prevent occurrence of extremely fine foam in the molded piece and unwanted space caused by contraction of the molded piece in the course of the cooling process.

The applicable pressure is defined in a range from 5 to 70 kgf/cm². If less than 5 kgf/cm² of the pressure were applied, unwanted space is generated in the molded piece. On the other hand, if more than 70 kgf/cm² of the pressure were applied, then inert gas ingredient will mix itself in the material, so it takes a long time to remove the gas from the molded piece. The suggested pressure range is significantly lower than hundreds kgf/cm² normally being applied to the conventional injection process. In other words, application of the lower pressure than the conventional practice effectively prevents crack from being generated in the molded product made from fragile relatively fragile resin material or having lengthy and slender configuration.

The molded piece in the isothermal tub is gradually cooled off in the upward direction from the bottom side. The cooling process frees distortion of the molded piece in the upward direction from the bottom side. The cooling process is executed whilst pressurizing the surface of the resin material with inert gas, and as a result, even the molded piece can be molded without making voids.

Next, the molded piece is subjected to the drawing process. It is desired that, in advance of execution of the drawing process, the molded piece be dried in vacuo at specific temperature below the glass transition point of the molded resin itself. If gas ingredients are dissolved the interior of the molded piece, this fully eliminates them. This prevents bubbles from generating, thus providing good quality molded product. The drawing process mentioned above is particularly useful when applied to optical members.

It is further desired that the inner surface of the mold be fully coated with the mold releasing agent to permit the cooled product to easily be released from the mold. In particular, either fluoroplastic or ceramic powder may be used as the mold releasing agent. Taking satisfactory smoothness into consideration, in other words, from the view-point of the capability to uniformly cover the inner surface of the mold and safety from adversely affecting optical characteristics of the molded product, it is desired that such fluoroplastic soluble in fluorine carbide solvent like those fluoroplastic containing the main chain consisting of fluorinated alicyclic group or fluorinated heterocyclic group may be used as the mold-releasing agent. It is further desired that the mold-releasing agent should display a glass transition point higher than the softening point of the molded thermoplastic-resin material. It is desired that either the fluorinated alicyclic group or the fluorinated heterocyclic group be of 5 through 7 membered saturated rings. These fluroplastics are designated in the form of general formulas 1 through 3 and also in the form of copolymers formed by one or more than one of monomers making up those general formulas 1 through 3 shown below and other copolymeric monomer containing fluorine.

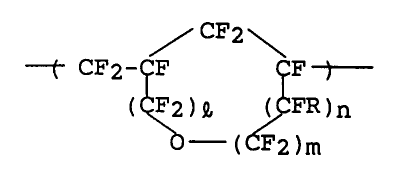

General formula 1 when ℓ = 0 - 5, m = 0 - 4, n = 0 -1, $\text{ℓ + m + n = 1 - 6}$, R = F or CF₃.

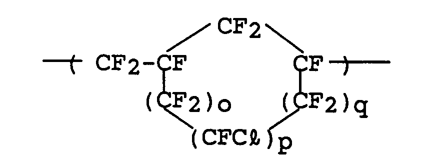

General formula 2 where o = 0 - 5, p = 0 - 5, q = 0 - 5, $\text{o + p + q = 1 - 6}$.

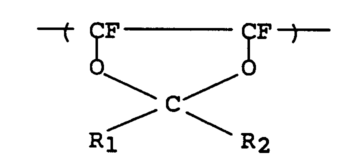

General formula 3 where R₁ = F or CF₃, R₂ = F or CF₃.

The fluoroplastics having cyclic structure on main chain as shown general formulas 4 to 9 are to be representative. 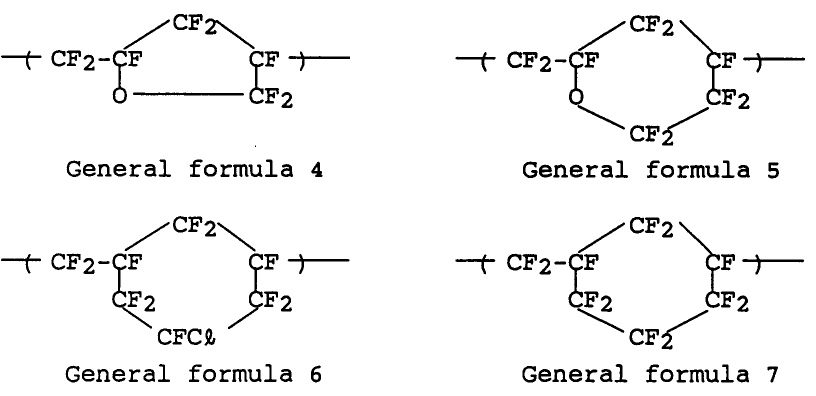 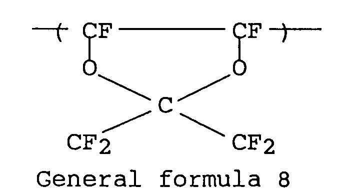
Copolymer consisting of 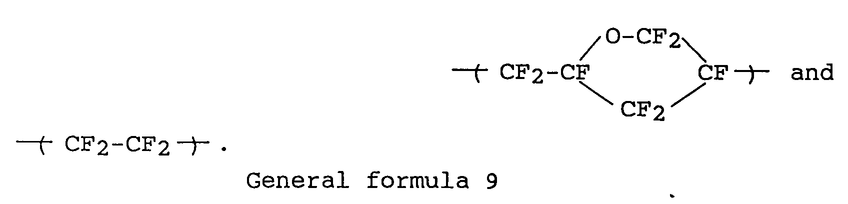
The fluoroplastics composed of those rings and main chains shown above may be used as mold releasing agent. Typically, the following commercially available fluoroplastics are suggested for making up the mold-releasing agent. TEFLON AF-1600 and AF-2400 (a registered trade mark and products of E. I. du Pont de Nemours & Co., Inc.) and CYTOP (a registered trade mark and a product of Asahi Glass Co., Ltd.)

Normally, any of those fluoroplastics is soluble in fluorinated hydrocarbon (CmFm, CmHpFn) which is conventionally called fluoric carbide. Fluoroplastic is dissolved in solvent like fluoric carbide for example, coated on the inner surface of the mold. Then, flurorplastic is coated on the inner surface of the mold by removing the solvent. Since the mold-releasing agent fully coats the inner surface of the mold in the liquid state, unlike the fine-particle mold releasing agent, the inner surface of the mold is perfectly prevented from turning rugged.

In consequence, when molding resin material into the preform of optical fibers for example, light transmission loss is minimized. Furthermore, since the liquified mold-releasing agent uniformly covers the inner surface of the mold, if the mold were provided with mirror-polished inner surface, then the film of the coated mold-releasing agent also remains in the mirror-polished state, and as a result, the molded piece is also superficially complete with mirror-polished finish. Furthermore, after fully molding resin material, fluoroplastic coated on the surface of the molded piece can easily be removed merely by applying fluoric carbide. Incidentally, since fluoroplastic is heat-stable, it provides quite satisfactory releasing effect even when being exposed to high temperature, and therefore, fluoroplastic is also effectively applicable to the releasing agent of such resin materials that should be molded at high temperature. Furthermore, use of the proper mold releasing agent effectively prevents impurities deposited on the mold from migrating into the moldable resin material. In consequence, the quality of the molded optical member cannot adversely be affected at all.

When the molded optical member is the preform of plastic optical fibers, the produced preform is subjected to the drawing by applying specific temperature above the glass transition point and below the melting point of the molded resin. Thus, the cores of optical fibers are produced. It is desired that the drawing process be executed at specific temperature at least 30°C higher than the glass transition point of the molded resin. This is because resin material used the cores of optical fibers turns into white unless the drawing process is executed at specific temperature at least 30°C higher than the glass transition point of the molded resin. When the drawing process is performed to the preform, it is desired that the molded resin be dried in vacuo at specific temperature below the glass transition point of the molded resin before executing the drawing process. This is because of removing the gas dissolved in the preform. Thus, the drawing process prevents making foam in the preform.

In order to provide cladding on the produced core, for example, there is such a method which coats the external surface of the core with fluoroplastic dissolved in fluoric solvent incapable of attacking the core and then removes the solvent. There is a method in which thermosetting resin is coated on the core using a die and then hardened. This method may use such fluoroplastic identical to the one that coats the mold available for the molding of preform of optical fibers or it may also use any other type of fluoroplastic as well.

### Example 1

Referring now to the accompanying drawings, the embodiments of the invention is described below.

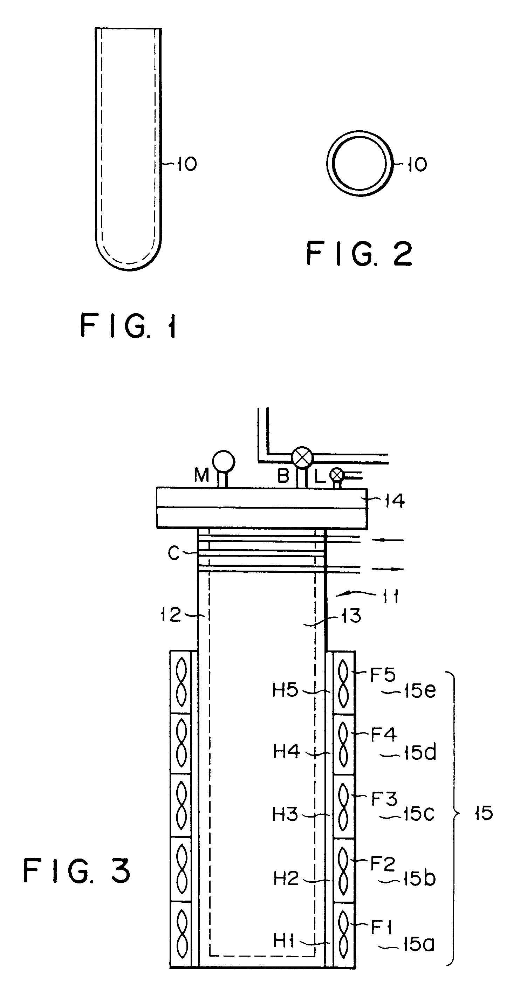

First, inventors uniformly coated the inner surface of a cylindrical mold 10 having an end closed as shown in Figs. 1 and 2 with mold releasing agent, and then dried at ordinary temperature and dried in the isothermal tube at 120°C. Thus, mold releasing agent is coated uniformly on the surface. Specifically, inventors used mold releasing solution containing 0.5% by weight of TEFLON AF-2400 (a registered trade mark and a product of E. I. du Pont de Nemours & Co., Inc.) dissolved in FLUORINART (a registered trade mark and a product of Sumitomo 3M Co., Ltd.) which served as solvent.

Next, inventors filled the cylindrical mold 10 with polycarbonate resin PANLITE AD-5503 (a registered trade mark and a product of Teijin Chemical Co., Ltd.), and then loaded the resin-filled mold 10 in an isothermal tub 11 shown in Fig. 3. This resin material was preliminarily dried at 120°C for 120 consecutive hours in vacuo.

The isothermal tub 11 is composed of a tube body 12, a molding chamber 13 inside of the tube body 12, an external cover unit 14 which airtightly seals the molding chamber 13, and a heating/cooling section which is divided into five zones 15a through 15e respectively being provided with heaters H1 through H5 and cooling fans F1 through F5. A supply tubes are connected via the cover unit 14 to a vacuum source (not shown) and an inert-gas supply source (not shown) by way of interconnecting to the molding chamber 13 via a switchable valve B. The reference characters M, C, and L shown in Fig. 3 respectively designate a pressure gauge, a cold water supply tube set to the lateral walls of the isothermal tub 11, and a leak valve.

Next, inventors electrically activated those heaters H1 through H5 surrounding the isothermal tub 11, and then continuously heated the isothermal tub 11 at 250°C. Next, while maintaining the heated condition at 250°C, inventors turned the switchable valve B to the vacuum source, and then fully vacuumed the interior of the isothermal tub 11. As a result, the loaded resin material was freed from foam in the vacuum condition which lasted for an hour.

Next, inventors turned the switchable valve B to the inert-gas supply source, and then delivered argon gas to the interior of the isothermal tub 11. Then, applying 10 kgf/cm² of pneumatic force, inventors pressurized the surface of melted resin material in the mold 10 in the isothermal tub 11 for about 10 minutes.

Next, inventors disconnected power from the bottom heater Hl, and simultaneously activated the bottom fan F1. After 10 minutes is past, inventors then disconnected power from the heater H2 right above the bottom heater H1 and simultaneously activated the second fan F2. In this way, inventors sequentially disconnected power from the remaining heaters and activated the corresponding fans to sequentially cool off the mold 10 in the upward direction.

After 90 minutes are past, inventors released the leak valve L to atmospherically level off the internal molding chamber 13 of the isothermal tub 11. Then, inventors took the mold 10 out of the isothermal tub 11, and then extracted the molded optical member from the mold 10.

Finally, inventors evaluated optical characteristic of the molded optical member. Inventors cut the molded piece by 10 cm of length, processed both ends with a hot plate, and then checked light permeability. The complete sample exhibited 86% of light permeability at 660 nm of wavelength, thus proving very satisfactory result.

### Example 2

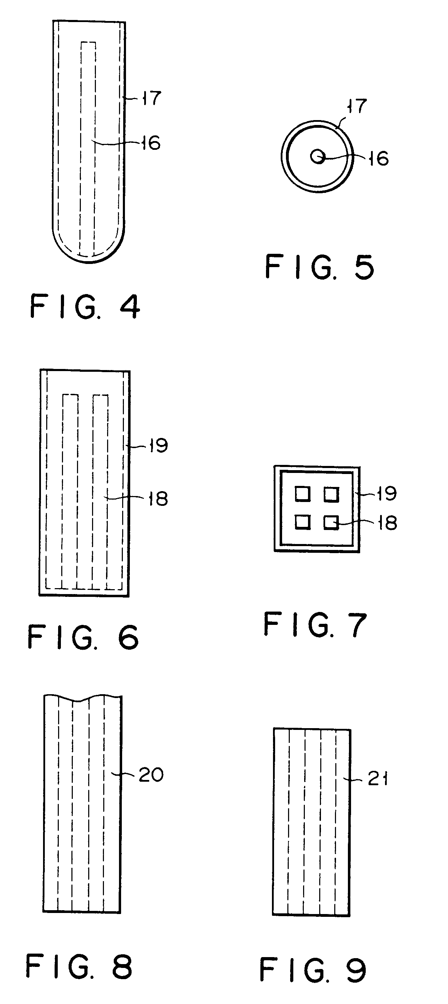

Except for the introduction of a cylindrical mold 17 containing a bar-like lengthy region 16 in the center and a closed end as shown in Figs. 4 and 5, inventors produced a cylindrical optical member by executing those sequential processes identical to those which were done for example 1.

The cylindrical molded optical member can directly be made available for the light wave guide. When preparing clad of optical fibers with the cylindrical molded optical member, first, this cylindrical member is elongated into tubular shape. In this case, optical fibers can be produced by initially pouring thermosetting resin material having high refractive index into the tube and hardening the resin. Those optical fibers produced from these processes contain extremely clean inner surface and minimum transmission loss factor. In particular, instead of polycarbonate resin, if polymethylpentene or ethylen-tetrafluoroethylene copolymer and tetrafluoroethylene is used as resin material thermosetting resin available for the core material is easily selected from the viewpoint of the refractive index.

### Example 3

Except for the introduction of a square prism mold 19 containing four of bar-like member 18 each having the square section as shown in Figs. 6 and 7, in the same way as was done for example 1, inventors produced square prism optical member 20 containing four square holes as shown in Fig. 8. As shown in Fig. 9, the square prism optical member 20 can easily be converted into light wave guide 21 by initially cutting off both ends and then optically polishing the cut ends.

### Example 4

Except for the introduction of POLYARYLATE P-5001 (a registered trade mark and a product of Unitika Co., Ltd.) in place of polycarbonate resin and the raise of internal temperature of the isothermal tub 11 to 310°C, in the same way as was done for example 1, inventors produced molded optical member.

After measuring the light permeability of the molded optical member in the same way as was done for example 1, inventors confirmed that the molded optical member exhibited 70% of light permeability at 660 nm of wavelength, thus providing satisfactory result.

### Example 5

Except for the introduction of POLYETHERSULFON (a registered trade mark and a product of Mitsui To-atsu Chemical Co., Ltd.) in place of polycarbonate resin and the raise of internal temperature of the isothermal tub 11 to 330°C, in the same way as was done for example 1, inventors produced molded optical member. The molded optical member has quite satisfactory shape and exhibits optical characteristic.

### Example 6

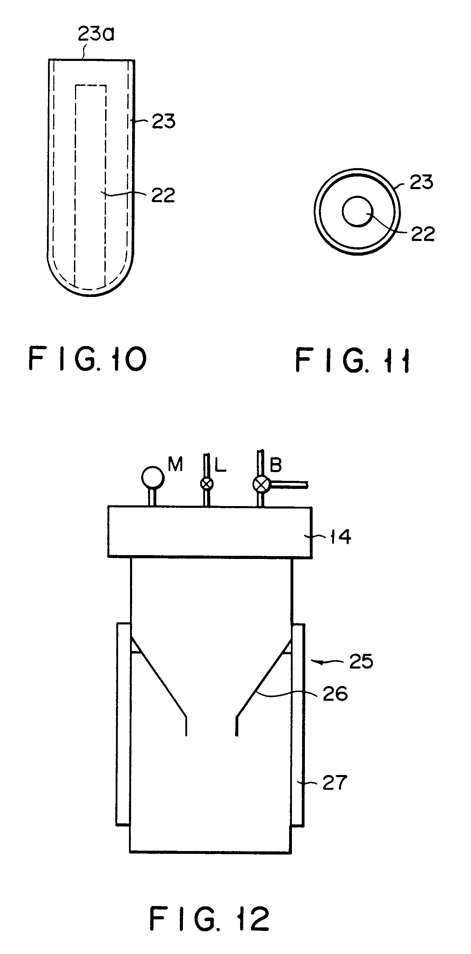

First, inventors prepared a cylindrical mold 23 containing a bar-like member 22 in the center as shown in Figs. 10 and 11, and then coated the inner surface with the selected mold-releasing agent identical to the one made available for example 1, and then fully dried the coated inner surface of the cylindrical mold 23. Next, inventors loaded the cylindrical mold 23 in an isothermal tub 25 shown in Fig. 12. Fig. 12 schematically designates the isothermal tub 25. Those components identical to those shown in Fig. 3 are respectively designated by the identical reference numerals and characters, and thus, description of these is deleted here.

The isothermal tub 25 contains a funnel 26 which interconnects the upper aperture 23a of the mold 23, where a heater 27 is installed by way of surrounding the external surface of the isothermal tub 25.

Inventors filled the cylindrical mold 23 with the preliminarily put into flake-form polycarbonate resin PANLITE L-1225 (a registered trade mark and a product of Teijin Chemical Co., Ltd.) through the funnel 26. Next, inventors heated the interior of the isothermal tub 25 to 260°C by activating the heater 27, and then turned the switchable valve B to the vacuum source, and then maintained the vacuum condition for 3 hours to defoam the resin material preliminarily dried at 120°C for 120 hours.

After fully defoaming the loaded resin material, inventors turned the switchable valve B to the inert-gas supply source, and then fed argon gas into the isothermal tub 25. Next, inventors pressurized the surface of melted resin material in the mold 23 inside of the isothermal tub 25 for about 10 minutes by applying 10 kgf/cm² of pressure. Next, inventors removed the heater 27, and then sequentially cooled off respective regions covered by the heater 27 in the upward direction from the bottom side by bringing the regions contact with water.

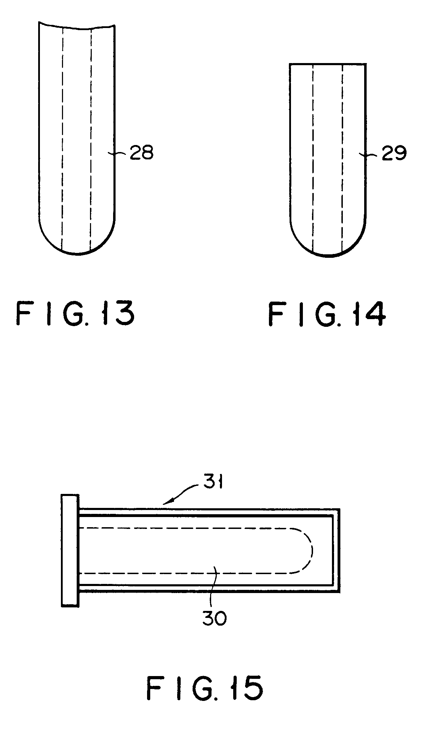

Next, inventors released the leak valve L to atmospherically level off the interior of the isothermal tub 25, and then took the cylindrical mold 23 out of the isothermal tub 25. As a result, a molded optical member 28 shown in Fig. 13 was yielded from the cylindrical mold 23. Next, inventors cut an end of the molded optical member 28 as shown in Fig. 14, and then optically polished both ends. In consequence, inventors produced quite satisfactory light wave guide 29.

Inventors then dried the molded optical member 28 in vacuum condition while keeping the molded member 28 at temperature below the glass transition point, and then elongated it while keeping it at 260°C. Finally, inventors produced clad available for optical fibers. Inventors confirmed that optical fibers using the novel clad exhibited quite satisfactory optical characteristic.

### Comparative Example 1

Using polycarbonate resin (PANLITE AD-5503, a product of Teijin Chemical Co., Ltd.), inventors executed a trial molding process by injecting resin material into a mold 31 containing cavity 30 shown in Fig. 15 by applying an injection molding machine having 65 mm of inner diameter. Inventors preliminarily coated the inner surface of the mold 31 with silicone oil serving as mold-releasing agent and then heated the mold 31 at 250°C. After completing the molding process, inventors cooled off the mold 31 and then extracted a molded optical member.

After measuring light permeability of the molded optical member in the same way as was done for example 1, inventors confirmed that the molded optical member merely exhibited 58% of light permeability at 660 nm of wavelength, and yet, one of those four molded optical members cracked itself.

### Comparative Example 2

Except for the introduction of ceramic powder as mold releasing agent in place of silicone oil and 260°C of the molding temperature, in the same way as was done for comparative example 1, inventors molded five units of optical member.

After evaluating light permeability of these molded optical members, in the same way as was done for example 1, despite of light permeability rated to be 63% at 660 nm of wavelength, inventors confirmed that four out of five molded optical members cracked themselves. The surface of molded optical members can not keep the optical condition.

As is clear from the above description, since the method embodied by the invention effectively defoams fluid thermoplastic-resin material loaded in the mold in vacuo, no space can remain in the resin material, and yet, since the fluid thermoplastic-resin material is molded by means of pressurized inert gas, even the slightest pin hole cannot be generated in the molded member. Furthermore, since distortion is effectively released by sequentially cooling off the heated mold in the upward direction from the bottom side, the molding system embodied by the invention can securely and stably produce quality optical members.

## Claims

1. A method of manufacturing thermoplastic-resin molded optical members comprising the steps of:
- feeding thermoplastic-resin material into a mold;
- defoaming said thermoplastic-resin material in vacuo at a temperature causing said thermoplastic-resin material to turn into fluid; and
- producing a molded member by cooling off said mold in the upward direction from the bottom side while pressurizing a surface of the material in said mold characterized in that pressurizing is carried out with inert gas by applying a pressure in the range from 0.5 to 7 Mpa (5 to 70 kgf/cm²).

2. A method of manufacturing thermoplastic-resin molded optical members according to claim 1, further comprising a step of preliminarily coating the inner surface of said mold with fluoroplastic containing either fluorinated alicyclic group or fluorinated heterocyclic group in the main chain.

3. A method of manufacturing thermoplastic-resin molded optical members according to claim 2, characterized in that fluoroplastic contains specific glass transition point higher than the softening point of said thermoplastic-resin material.

4. A method of manufacturing thermoplastic-resin molded optical members according to claim 2, characterized in that the inner surface of said mold is coated with said fluoroplastic dissolved in solvent in the form of solution and then dried.

5. A method of manufacturing thermoplastic-resin molded optical members according to claim 4, characterized in that said solvent comprises a compound selected from the group consisting of CmFm+2 whereby m = 5 - 8, C₉F₁₆H₄, C₁₀F₁₆H₆, and mixture thereof.

6. A method of manufacturing thermplastic-resin molded optical members according to claim 1, characterized in that said molded optical member is provided as a preform for composing optical fibers.

7. A method of manufacturing thermoplastic-resin molded optical members comprising the steps of:
- feeding thermoplastic-resin material into a mold;
- defoaming said thermoplastic-resin material in vacuo at a temperature causing said thermoplastic-resin material to turn into fluid; and
- producing preform for composing optical fibers by cooling off said mold in the upward direction from the bottom side characterized in that during cooling pressure in the range of from 0.5 to 7 Mpa (5 to 70 kgf/cm²) is applied to a surface of the material in said mold with inert gas; and
- performing a drawing of said preform.

8. A method of manufacturing thermoplastic-resin molded optical members according to claim 7, further comprising a step of drying said preform in vacuo at specific temperature below the glass transition point of said thermoplastic resin before execution of said drawing.

## Patentansprüche

1. Verfahren zur Herstellung von aus thermoplastischem Harz geformten optischen Elementen, welches die Schritte umfaßt:
Zuführen von thermoplastischem Harzmaterial in eine Form;
Entschäumen besagten thermoplastischen Harzmaterials im Vakuum bei einer Temperatur, die die Umwandlung des thermoplastischen Harzmaterials in eine Flüssigkeit bewirkt; und
Herstellen eines geformten Elements durch Abkühlen besagter Form in der Aufwärtsrichtung von der Unterseite her, während eine Oberfläche des Materials in besagter Form unter Druck gesetzt wird, dadurch gekennzeichnet, daß
das unter Druck setzen mit einem Inertgas unter Anwendung eines Drucks in dem Bereich von 0,5 bis 7 Mpa (5 bis 70 kgf/cm²) durchgeführt wird.

2. Verfahren zur Herstellung von aus thermoplastischem Harz geformten optischen Elementen nach Anspruch 1, das weiter einen Schritt der vorausgehenden Beschichtung der inneren Oberfläche besagter Form mit einem Fluorkunststoff, der entweder fluorierte alicyclische Gruppe oder fluorierte heterocyclische Gruppe in der Hauptkette enthält, umfaßt.

3. Verfahren zur Herstellung von aus thermoplastischem Harz geformten optischen Elementen nach Anspruch 2, dadurch gekennzeichnet, daß der Fluorkunststoff einen spezifischen Glasübergangspunkt umfasst, der höher als der Erweichungspunkt besagten thermoplastischen Harzmaterials ist.

4. Verfahren zur Herstellung von aus thermoplastischem Harz geformten optischen Elementen nach Anspruch 2, dadurch gekennzeichnet, daß die innere Oberfläche besagter Form mit besagtem Fluorkunststoff, gelöst in einem Lösungsmittel, in der Form einer Lösung beschichtet und dann getrocknet wird.

5. Verfahren zur Herstellung von aus thermoplastischem Harz geformten optischen Elementen nach Anspruch 4, dadurch gekennzeichnet, daß besagtes Lösungsmittel eine Verbindung umfaßt, die gewählt ist aus der Gruppe bestehend aus CₘFₘ₊₂, in der m = 5 - 8 ist, C₉F₁₆H₄, C₁₀F₁₆H₆ und Mischungen derselben.

6. Verfahren zur Herstellung von aus thermoplastischem Harz geformten optischen Elementen nach Anspruch 1, dadurch gekennzeichnet, daß besagtes geformtes optisches Element als eine Vorform zum Zusammensetzen optischer Fasern bereitgestellt wird.

7. Verfahren zur Herstellung von aus thermoplastischem Harz geformten optischen Elementen, welches die Schritte umfaßt:
Zuführen von thermoplastischem Harzmaterial in eine Form;
Entschäumen besagten thermoplastischen Harzmaterials im Vakuum bei einer Temperatur, die die Umwandlung des thermoplastischen Harzmaterials in eine Flüssigkeit bewirkt; und
Herstellen einer Vorform zum Zusammensetzen optischer Fasern durch Kühlen besagter Form in der Aufwärtsrichtung von der Unterseite her, dadurch gekennzeichnet, daß während des Kühlens ein Druck in dem Bereich von 0,5 bis 7 Mpa (5 bis 70 kgf/cm²) auf die Oberfläche des Materials in besagter Form mit Inertgas angewendet wird; und
Ausführen einer Streckung besagter Vorform.

8. Verfahren zur Herstellung von aus thermoplastischem Material geformten optischen Elementen nach Anspruch 7, das weiter einen Schritt der Trocknung besagter Vorform im Vakuum bei einer spezifischen Temperatur unter dem Glasübergangspunkt besagten thermoplastischen Harzes vor Ausführung besagter Streckung umfaßt.

## Revendications

1. Procédé de fabrication d'éléments optiques moulés en résine thermoplastique comprenant les étapes de
- alimentation d'un moule en matériau de résine thermoplastique ;
- démoussage dudit matériau de résine thermoplastique sous vide à une température provoquant la transformation dudit matériau de résine thermoplastique en un fluide ;
- production d'un élément moulé en refroidissant ledit moule dans la direction ascendante à partir du côté inférieur tout en appliquant une pression sur une surface du matériau dans ledit moule, caractérisé en ce que l'application de la pression est effectuée avec un gaz inerte en appliquant une pression de 0,5 à 7 MPa (5 à 70 kgf/cm²).

2. Procédé de fabrication d'éléments optiques moulés en résine thermoplastique conforme à la revendication 1, comprenant en outre une étape consistant à enduire au préalable la surface interne dudit moule avec une matière plastique fluorée contenant un groupe alicyclique fluoré ou un groupe hétérocyclique fluoré dans la chaîne principale.

3. Procédé de fabrication d'éléments optiques moulés en résine thermoplastique conforme à la revendication 2, caractérisé en ce que la matière plastique fluorée comporte un point de transition vitreuse spécifique plus élevé que le point de ramollissement dudit matériau de résine thermoplastique.

4. Procédé de fabrication d'éléments optique moulés en résine thermoplastique conforme à la revendication 2, caractérisé en ce qu'on enduit la surface interne dudit moule avec ladite matière plastique fluorée dissoute dans un solvant, sous forme d'une solution, et on la sèche ensuite.

5. Procédé de fabrication d'éléments optiques en résine thermoplastique conforme à la revendication 4, caractérisé en ce que ledit solvant comprend un composé choisi dans l'ensemble constitué par les CₘFₘ₊₂, formule dans laquelle m vaut de 5 à 8, C₉F₁₆H₄, C₁₀F₁₆H₆, et des mélanges de ces composés.

6. Procédé de fabrication d'éléments optiques moulés en résine thermoplastique conforme à la revendication 1, caractérisé en ce que ledit élément optique moulé est fourni comme préforme pour constituer des fibres optiques.

7. Procédé de fabrication d'éléments optiques moulés en résine thermoplastique, comprenant les étapes de :
- alimentation du moule en matériau de résine thermoplastique ;
- démoussage dudit matériau de résine thermoplastique sous vide à une température provoquant la transformation dudit matériau de résine thermoplastique en un fluide ; et
- production d'une préforme destinée à constituer des fibres optiques en refroidissant ledit moule dans la direction ascendante à partir du côté inférieur, caractérisé en ce qu'au cours du refroidissement, on applique une pression de 0,5 à 7 MPa (5 à 70 kgf/cm²) à une surface du matériau dans ledit moule avec un gaz inerte ; et
- réalisation d'un étirage de ladite préforme.

8. Procédé de fabrication d'éléments optiques moulés en résine thermoplastique conforme à la revendication 7, comprenant en outre une étape consistant à sécher ladite préforme sous vide à une température spécifique inférieure au point de transition vitreuse de ladite résine thermoplastique avant la réalisation dudit étirage.
